# EUROPEAN PATENT APPLICATION

(11) **EP 4 588 544 A1**
(43) Date of publication of application: **23.07.2025**
(21) Application number: 23912479.5
(22) Date of filing: 06.10.2023
(51) Int. Cl.: A63F 13/533, A63F 13/24, A63F 13/35

(54) **METHOD AND DEVICE FOR DISPLAYING OPERATION INFORMATION OF GAMEPAD**

(30) Priority: 27.12.2022 KR 20220185589
(71) Applicant: Samsung Electronics Co., Ltd., Suwon-si, Gyeonggi-do 16677 (KR)
(72) Inventor: CHOI, Kilsoo, Suwon-si Gyeonggi-do 16677 (KR); KIM, Sehyun, Suwon-si Gyeonggi-do 16677 (KR); SHIN, Yongwoo, Suwon-si Gyeonggi-do 16677 (KR); LEE, Jongin, Suwon-si Gyeonggi-do 16677 (KR); PARK, Hyeeun, Suwon-si Gyeonggi-do 16677 (KR); CHOI, Junyoung, Suwon-si Gyeonggi-do 16677 (KR)
(74) Representative: Appleyard Lees IP LLP
(86) International application number: PCT/KR2023/015393
(87) International publication number: WO 2024/143797

(57) **Abstract**

A method by which an electronic device displays operation information of a gamepad, according to one embodiment of the present disclosure, may comprise the operations of: obtaining gamepad manufacturer information of a gamepad on the basis of identifying an electrical connection with the gamepad; obtaining game provider information from a cloud server that transmits, over a network, a game running on the electronic device; if the gamepad manufacturer information is identified as not being associated with the game provider information, displaying a guide screen on a display on the basis of the gamepad manufacturer information; and using the guide screen to guide through game actions associated with keystrokes on the gamepad.

## Description

### [Technical Field]

The disclosure relates to a method and device for displaying operation information of a gamepad.

### [Background Art]

Display devices may execute a game using a cloud server, e.g., cloud game. The cloud game refers to the game content received from a cloud server. The display device may wirelessly receive game content from the cloud server and execute the game content. The user may enjoy the cloud game through the display device. When using the cloud game through the display device, the user may use a gamepad, wiredly or wirelessly connected, to the display device. The gamepad is a controller, designed for playing games and has a different shape or button configuration than typical remote control devices. Gamepads have unique characteristics for each device manufacturer. For example, a gamepad manufactured by a first device manufacturer and a gamepad manufactured by a second device manufacturer may each have different shapes or key configurations, and key inputs transmitted from the respective gamepads to the display device may be different.

### [Disclosure of Invention]

### [Solution to Problem]

According to an aspect of the disclosure, a method for displaying operation information of a gamepad by an electronic device, the method comprising: based on identifying an electrical connection with the gamepad, obtaining gamepad manufacturer information about the gamepad; obtaining game provider information from a cloud server, which is providing, through a network, a game operating on the electronic device; based on identifying that the gamepad manufacturer information is not associated with the game provider information, controlling to display a guide screen on a display based on the gamepad manufacturer information; and guiding, using the guide screen, game operations associated with key inputs of the gamepad.

The gamepad manufacturer information may be identified as being associated with or being not associated with the game provider information based on a compatibility table, and wherein the compatibility table may be include information about an association between the gamepad manufacturer information and the game provider information.

The method may include, based on identifying that the gamepad manufacturer information does not correspond to and the game provider information, displaying the guide screen based on the gamepad manufacturer information.

The method may include, based on identifying the electrical connection between the gamepad and the electronic device, receiving the gamepad manufacturer information from the gamepad.

The method may include, based on identifying that the gamepad manufacturer information is associated with the game provider information, executing a game operation corresponding to a key input, from among the key inputs, received from the gamepad while operating the game; and based on failing to receive a control signal from the gamepad for a predetermined time, displaying, on the display, the guide screen, wherein the control signal includes one or more key inputs of the key inputs.

The method may include, based on the control signal being received from the gamepad: identifying the one or more key inputs in the control signal; identifying whether the game operation corresponding to the one or more key inputs is identified; and based on the game operation corresponding to the one or more key inputs being identified, increasing a count value, and based on the count value exceeding a predetermined threshold, displaying, on the display, the guide screen.

The method may include, based on failing to obtain the gamepad manufacturer information, receiving a gamepad list from an external server; and displaying the gamepad list on the display.

The method may include, based on any item in the displayed gamepad list being selected, displaying, on the display, the guide screen corresponding to the selected item.

The guide screen may include a first guide screen and a second guide screen, wherein the first guide screen includes guide information associated with an operating game and the gamepad, wherein the second guide screen includes guide information associated with the gamepad regardless of the operating game, and wherein the first guide screen may be configured based on mapping information between the operating game and the gamepad, and the second guide screen may be configured based on default information about the gamepad.

The mapping information may be received from the cloud server, configured based on at least part of the game provided from the cloud server, or may be pre-stored in a memory of the electronic device.

The mapping information includes identification information for identifying gamepads, a key input list provided for each of the gamepads, and game operation information mapped to each key input included in the key input list, and wherein the mapping information may be databased based on a type of the gamepad and the game.

The electronic device may be a display device.

According to an aspect of the disclosure, an electronic device includes: a display; at least one processor; at least one memory configured to store at least one instruction; and at least one transceiver, wherein the at least one processor is configured to execute the at least one instruction to: based on identifying an electrical connection with a gamepad, obtain gamepad manufacturer information about the gamepad; obtain game provider information from a cloud server, which is providing, through a network, a game operating on the electronic device; and based on identifying that the gamepad manufacturer information is not associated with the game provider information, control the display to display a guide screen based on the gamepad manufacturer information.

The at least one processor may be further configured to execute the at least one instruction to: identify the gamepad manufacturer information as being associated with or being not associated with the game provider information based on a compatibility table, and wherein the compatibility table includes information about an association between the gamepad manufacturer information and the game provider information.

The at least one processor may be further configured to, execute the at least one instruction to, based on identifying that the gamepad manufacturer information does not correspond to the game provider information, control the display to display the guide screen based on the gamepad manufacturer information.

According to an aspect of the disclosure, an electronic device includes: a display; at least one transceiver; at least one memory configured to store at least one instruction; and at least one processor configured to execute the at least one instruction to: based on identifying an electrical connection with a gamepad, obtain gamepad manufacturer information about the gamepad; obtain game provider information from a cloud server, which is providing, through a network, a game operating on the electronic device; based on identifying that the gamepad manufacturer information is not associated with the game provider information, control the display to display a guide screen based on the gamepad manufacturer information; and guide, using the guide screen, game operations associated with key inputs of the gamepad.

The at least one processor may be further configured to execute the at least one instruction to, based on identifying the electrical connection between the gamepad and the electronic device, control the at least one transceiver to receive the gamepad manufacturer information from the gamepad.

The at least one processor may be further configured to execute the at least one instruction to: based on identifying that the gamepad manufacturer information is associated with the game provider information, execute a game operation corresponding to a key input, from among the key inputs, received from the gamepad while operating the game; and based on failing to receive a control signal from the gamepad for a predetermined time, control the display to display the guide screen, wherein the control signal includes one or more key inputs of the key inputs.

The at least one processor may be further configured to execute the at least one instruction to: based on failing to obtain the gamepad manufacturer information, control the at least one transceiver to receive a gamepad list from an external server; and control the display to display the gamepad list.

The at least one processor may be further configured to, based on any item in the displayed gamepad list being selected, control the display to display the guide screen corresponding to the selected item.

### [Brief Description of Drawings]

FIG. 1 is a block diagram illustrating a game service system, according to one or more embodiments;
FIG. 2 is a block diagram illustrating an electronic device, according to one or more embodiments;
FIG. 3 is a block diagram illustrating a display device, according to one or more embodiments;
FIGS. 4 and 5 are views illustrating an example of displaying a guide screen based on a result of comparison between gamepad manufacturer information and game provider information, according to one or more embodiments;
FIG. 6 is a view illustrating an example of displaying a guide screen based on whether a control signal is received, according to one or more embodiments;
FIGS. 7 and 8 are views illustrating an example in which a result of processing a key input received from a gamepad is abnormal, according to one or more embodiments;
FIG. 9 is a flowchart illustrating a method for displaying a guide screen of a gamepad, according to one or more embodiments; and
FIG. 10 is a reference view illustrating an example of a guide screen, according to one or more embodiments.

Reference may be made to the accompanying drawings in the following description, and specific examples that may be practiced are shown as examples within the drawings. Other examples may be utilized and structural changes may be made without departing from the scope of the various examples.

### [Mode for the Invention]

Embodiments of the disclosure are described below with reference to the accompanying drawings. However, various changes may be made to the described embodiments such the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

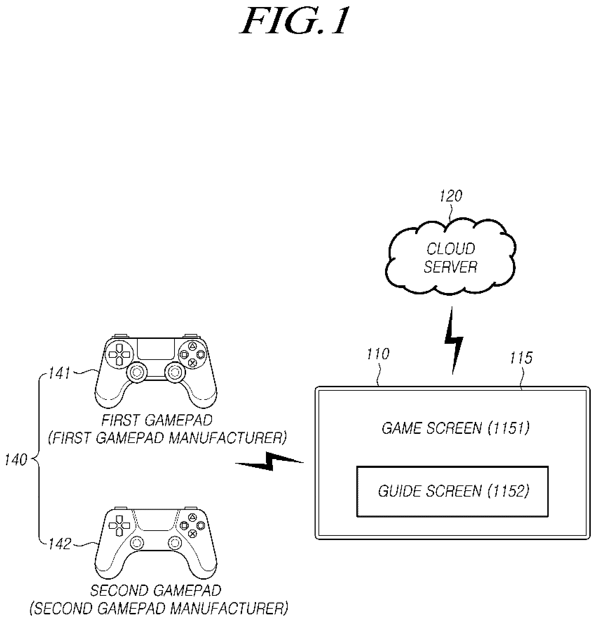

FIG. 1 is a block diagram illustrating a game service system, according to one or more embodiments.

Referring to FIG. 1, a game service system may include one or more electronic devices. One or more electronic devices may include a display device 110, gamepads 140 (e.g., 141 and 142), and a cloud server 120.

The display device 110 is an electronic device including a display (or display module) 115 capable of displaying an image. The display device 110 may include a TV device, a smartphone, a smart watch, smart glasses (e.g., XR glasses or AR glasses), or a head mounted display (HMD), but various embodiments of the disclosure are not limited thereto.

The gamepads 140 (e.g., 141 and 142) are control devices for transmitting a key input associated with a game operation to another electronic device (e.g., the display device 110) electrically connected thereto. The gamepads 140 (e.g., 141 and 142) may include a plurality of key buttons associated with a game operation. A different key code may be mapped to each of the plurality of key buttons. When the user's physical input to the key button is received, the gamepads 140 (e.g., 141 and 142) may transmit a key input, including the key code, to another electronic device electrically connected thereto. The other electronic device connected to the gamepads 140 (e.g., 141 and 142) may detect the key input and may execute a game operation corresponding to the detected key input. The game operation may include an operation of applying a user input to a virtual button on the game screen 1151, an operation of moving a focus on the virtual button on the game screen 1151, an operation of moving an avatar represented in the game screen 1151, or an operation of controlling the avatar to execute a preconfigured movement, but the game operation according to various embodiments of the disclosure is not limited to the above-described examples.

The cloud server 120 is a server device capable of transmitting a cloud-based game (cloud game) to the other electronic device (e.g., the display device 110). The cloud server 120 may transmit the game to the other electronic device wiredly or wirelessly connected through a network. The cloud server 120 may transmit the game to another electronic device based on a streaming method or a download method. If the game is transmitted using the streaming method, the game may be executed by the electronic device receiving the game as long as the connection with the cloud server 120 is maintained. If the game is transmitted using the download method, the electronic device receiving the game has to maintain the connection with the cloud server 120 until downloading is completed, but thereafter, the game may executed even after the connection is lost or severed.

The gamepads 140 (e.g., 141 and 142) may include a plurality of key buttons, and each of the gamepads 140 (e.g., 141 and 142) may include different key buttons and/or configurations for each manufacturer. Key buttons constituting the first gamepad 141 may be different from key buttons constituting the second gamepad 142 in at least one of type, position, and number. As the key buttons are different for each of the gamepads 140 (e.g., 141 and 142), key inputs that may be configured for each of the gamepads 140 (e.g., 141 and 142) may also be different. For example, the first gamepad 141 may include a first key button, but the second gamepad 142 may not include the first key button. In this case, the second gamepad 142 would not be able to configure a key input associated with the first key button.

In response to a physical input to each key button, the gamepads 140 (e.g., 141 and 142) may transmit the information and/or instruction associated with the key input to the other electronic device (e.g., the display device 110) electrically connected thereto. The key input may be associated with one or more game operations. The association between the key inputs and the game operations may be constituted of mapping information. For example, the mapping information may include a plurality of key inputs, and game operation(s) associated with each key input. The game operation may include, e.g., a screen switch operation, an avatar operation.

The cloud game may include the mapping information. The mapping information may be associated with at least one game operation and at least one key input. Based on the mapping information, the display device 110 may detect the game operation associated with the key input. For example, the display device 110 may receive a key input from the gamepads 140 (e.g., 141 and 142), detect a game operation corresponding to the key input, and execute the detected game operation. The mapping information may be included as at least a part of the cloud game, but various embodiments of the disclosure are not limited thereto.

The mapping information may vary depending on the game provider. The cloud game provided by the first game provider may include first mapping information, and the cloud game provided by the second game provider may include second mapping information.

For example, if substantially identical gamepads 140 (e.g., 141 and 142) are connected to the display device 110 and the cloud game provided by the first game provider is executed, the display device 110 may execute the game operation based on the first mapping information. If substantially identical gamepads 140 (e.g., 141 and 142) are connected to the display device 110 and the cloud game provided by the second game provider is executed, the display device 110 may execute the game operation based on the second mapping information. At least parts of the first mapping information and the second mapping information are substantially the same, but the remaining parts may be different. Due to the difference between the first mapping information and the second mapping information, even if a control signal, including a key input, is received from the same gamepads 140 (e.g., 141 and 142), a game operation associated with the key input may not be identified.

The cloud game may include one or more mapping information. If the cloud game includes two or more mapping information, the display device 110 may select any one of the two or more mapping information and execute a game operation based on the selected mapping information. The mapping information may be associated with the gamepad manufacturer information, and the display device 110 may use the gamepad manufacturer information to select the mapping information associated with the gamepads 140 (e.g., 141 and 142) connected to the display device 110. After the mapping information is selected, the display device 110 may execute a game operation associated with a key input received from the gamepads 140 (e.g., 141 and 142) using the selected mapping information.

While the cloud game is running, the display device 110 may display the execution screen (i.e., the game screen 1151) of the cloud game on the display 115.

The game screen 1151 may include various graphical user interface (GUI) elements for executing the game operation. When a user input (e.g., a key input to the gamepads 140 (e.g., 141 and 142)) to the GUI element is identified, the display device 110 may execute the game operation associated with the GUI element to which the user input is identified. GUI elements may be mapped with key inputs to the game pads 140 (e.g., 141 and 142). For example, a first GUI element may be mapped with a first key input to the game pads 140 (e.g., 141 and 142), and a second GUI element may be mapped with a second key input. When the control signal, including the first key input, is received from the gamepads 140 (e.g., 141 and 142), the display device 110 may determine that the user input to the first GUI element is identified. When the control signal including the second key input is received from the gamepads 140 (e.g., 141 and 142), the display device 110 may determine that the user input to the second GUI element is identified. When a user input to the GUI element is identified, the display device 110 may execute a game operation associated with the user input. For example, when a user input to a GUI element indicating 'start game' is identified, a game operation for starting the game may be executed. For example, when a user input to a GUI element indicating 'select game' is identified, a game operation for selecting the game may be executed.

The game screen 1151 may include a game avatar. When a user input (e.g., a key input to the gamepads 140 (e.g., 141 and 142)) is identified for the game avatar, the display device 110 may execute a game operation (e.g., an avatar operation) associated with the user input. For example, when a key input indicating 'walk forward' is identified, an avatar operation for advancing the avatar may be executed. For example, when a key input indicating 'walk backward' is identified, an avatar operation of retreating the avatar may be executed. For example, when a key input indicating 'sit' is identified, an avatar operation for allowing the avatar to sit may be executed.

The cloud game may include game provider information for identifying the game provider. For example, if the cloud game is provided by a first game provider, the cloud game includes first game provider information, and if the cloud game is provided by a second game provider, the cloud game includes second game provider information. In the disclosure, the game provided by the first game provider may be referred to as a first cloud game, and the game provided by the second game provider may be referred to as a second cloud game. The first cloud game and the second cloud game may be cloud games of substantially the same category but may include different mapping information. In other words, the first cloud game may include first mapping information, and the second cloud game may include second mapping information.

The display device 110 may receive a compatibility table from the cloud server 120. The compatibility table may be stored in the memory of the display device 110. The compatibility table may include a plurality of game provider information and a plurality of gamepad manufacturer information. The compatibility table may include a relationship (e.g., match or mismatch) between game provider information and gamepad manufacturer information. For example, the first game provider information may be associated with one or more gamepad manufacturer information and included/configured in the compatibility table. For example, the first gamepad 141 manufacturer information may be associated with one or more gamepad manufacturer information and may be included/configured in the compatibility table.

The display device 110 may identify the relationship (e.g., association) between the gamepads 140 (e.g., 141 and 142) and the cloud game being executed (e.g., game in progress), using the compatibility table. The gamepad manufacturer information and the game provider information may be configured with a predetermined identification code. In an example, when the identification code for the gamepad manufacturer matches the identification code for the game provider information, the display device 110 may determine that the game provider information is associated with the gamepad manufacturer information, by using the compatibility table between the gamepad manufacturer information and the game provider information. In an example, when the identification code for the gamepad manufacturer does not match the identification code for the game provider information, the display device 110 may determine, by using the compatibility table, that the game provider information is not to be associated with the gamepad manufacturer information.

If it is identified that the game provider information is associated with the gamepad manufacturer information, the display device 110 may not display the guide screen 1152. If it is identified that the game provider information is not associated with the gamepad manufacturer information, the display device 110 may display a guide screen 1152. The guide screen 1152 may include at least some of key button(s) and key input(s) and game operation(s) for the user to operate the gamepads 140 (e.g., 141 and 142). For example, the guide screen 1152 may include images of gamepads 140 (e.g., 141 and 142) showing key button(s). For example, the guide screen 1152 may include a key input image, and the key input image may correspond to key input(s) that may be input using each key button(s). The guide screen 1152 may include a game operation description, which may include at least one of text or an image describing the game operation associated with the key input.

In one or more embodiments of the disclosure, the display device 110 may display the guide screen 1152 on the display 115 according to a predetermined condition. By displaying the guide screen 1152, the user may understand how to operate the gamepads 140 (e.g., 141 and 142). The user may learn the functions of the key buttons and key inputs related to each game operation of the cloud game through the guide screen 1152 even without separate user's manual/guide. A method for controlling the display device 110 to automatically display the guide screen 1152 on the display 115 is described below.

According to an embodiment of the disclosure, the display device 110 may be replaced with a game console device. The game console device may function and/or serve as the display device 110 described above. The game console device may be electrically connected to the display device 110. The game console device may transmit the game screen 1151 to the display device 110.

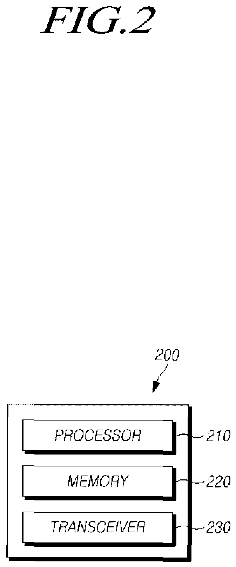

FIG. 2 is a block diagram illustrating an electronic device, according to one or more embodiments.

Referring to FIG. 2, an electronic device 200 according to one or more embodiments of the disclosure may include a processor 210, a memory 220, and a transceiver 230. The memory 220 and the transceiver 230 may be electrically or functionally connected to the processor 210. The processor 210 may be a single processor or a plurality of processors and may control components constituting the electronic device 200 by generating and transmitting a control command.

According to one or more embodiments of the disclosure, the processor 210 may include a storage and processing circuit unit for supporting the operation of the electronic device 200. The storage and processing circuit unit may include a storage, such as non-volatile memory (e.g., flash memory, or other electrically programmable ROM configured to form a solid state drive (SSD)) or volatile memory (e.g., static or dynamic RAM). The processing circuit unit in the processor 210 may be used to control the operation of the electronic device 200. The processing circuit unit may be based on one or more microprocessor(s), microcontroller(s), digital signal processor(s), baseband processor(s), power management section(s), audio chip(s), or application specific integrated circuit(s).

According to one or more embodiments of the disclosure, the memory 220 may be a single memory or a plurality of memories, and may include a memory area for one or more processors 210 for storing variables used in the protocol, configuration, control, and other functions of the electronic device 200, including operations corresponding to or including any one of the methods and/or procedures described as an example in the disclosure. Further, the memory 220 may include non-volatile memory, volatile memory, or a combination thereof. Further, the memory 220 may include a memory slot that enables insertion and removal of removable memory cards in one or more formats (e.g., SD card, Memory stick, and compact flash).

According to one or more embodiments of the disclosure, the transceiver 230 may include a wireless communication module or a radio frequency (RF) module. The wireless communication module may include Wi-Fi, bluetooth, global positioning system (GPS) or near field communication (NFC). For example, the wireless communication module may provide a wireless communication function using a RF. Additionally or alternatively, the wireless communication module may include a network interface or modem for connecting the electronic device 200 with a network (e.g., Internet, LAN, WAN, telecommunication network, cellular network, satellite network, POTS or 5G network). The RF module may be responsible for data transmission/reception, e.g., transmitting and receiving data RF signals or invoked electronic signals. As an example, the RF module may include a power amp module (PAM), a frequency filter, or a low noise amplifier (LNA). The RF module may further include parts (e.g., conductors or wires) for communicating radio waves in a free space upon performing wireless communication.

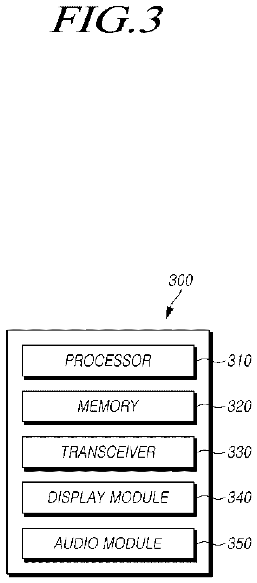

FIG. 3 is a block diagram illustrating a display device, according to one or more embodiments.

Referring to FIG. 3, a display device 300 according to one or more embodiments of the disclosure may include a processor 310, a memory 320, and a transceiver 330. The memory 320 and the transceiver 330 may be electrically or functionally connected to the processor 310. The processor 310 may control components constituting the display device 300 by generating and transmitting a control command. The processor 310, the memory 320, and the transceiver 330 may be substantially the same as the processor 210, the memory 220, and the transceiver 230, respectively, of the electronic device 200 of FIG. 2 described with reference to FIG. 2.

In an embodiment, the display device 300 may include a display module 340. The display module 340 may include a panel, a hologram device, or a projector. The panel may be implemented to be flexible, transparent, or wearable. The panel and the touch panel may be configured in a single module. The hologram device may make three dimensional (3D) images (e.g., holograms) in the air by using light interference. The projector may display an image by projecting light onto a screen. The screen may be, for example, located inside or outside of the display device 300. In accordance with an embodiment, the display module 340 may further include a control circuit to control the panel, the hologram device, or the projector.

In an embodiment, the display device 300 may include an audio module 350. The audio module 350 may convert a sound into an electric signal or vice versa, for example. The audio module 350 may process sound information input or output through e.g., a speaker, a receiver, an earphone, or a microphone.

The display device 300 according to one or more embodiments of the disclosure may execute or implement methods, operations, and/or instructions described below. The display device 300 may store a program including instructions related to various operations described below in the memory 320 and may specifically or physically implement each operation by executing the program.

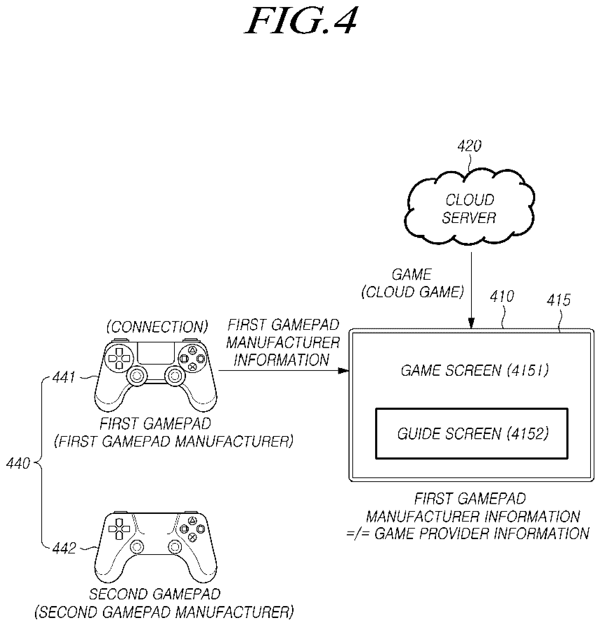

Hereinafter, a scenario in which a guide screen is displayed is described with reference to FIGS. 4 to 8. The game service system described with reference to FIGS. 4 to 8 includes a display device, a gamepad, and a cloud server. The display device is the electronic device described with reference to FIG. 2 and may be, e.g., the display device described with reference to FIG. 3. A cloud server is an example of the electronic device of FIG. 2. The cloud server and the display device may be connected wiredly or wirelessly. The gamepad and the display device may be connected wiredly or wirelessly.

Referring to FIGS. 4 to 8, the gamepads (440, 540, 640, 740, and/or 840) may include a first gamepad (441, 541, 641, 741, or 841) and a second gamepad (442, 542, 642, 742, or 842). The first gamepad (441, 541, 641, 741, or 841) is manufactured by the first gamepad manufacturer. Further, the second gamepad (442, 542, 642, 742, or 842) is manufactured by the second gamepad manufacturer.

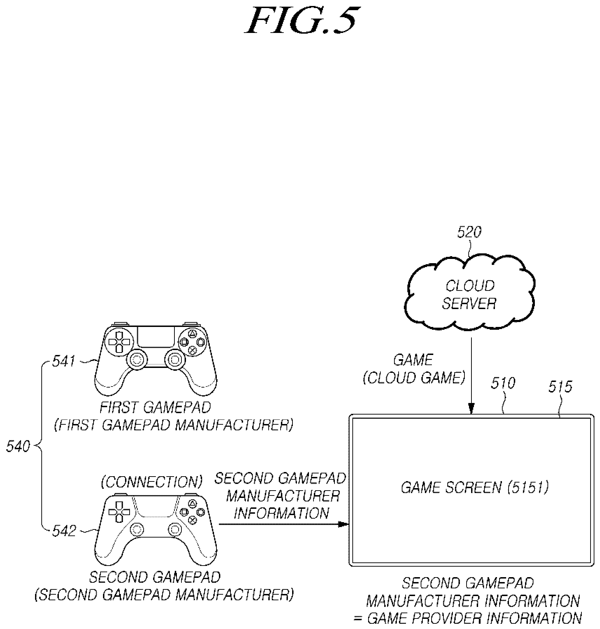

FIGS. 4 and 5 are views illustrating an example of displaying a guide screen based on a result of comparison between gamepad manufacturer information and game provider information, according to one or more embodiments.

Referring to FIGS. 4 and 5, the display device (410 or 510) may be connected to the first gamepad (441 or 541). The first gamepad (441 or 541) may transmit manufacturer information about the first gamepad (441 or 541) to the display device (410 or 510) based on the connection with the display device (410 or 510).

The display device (410 or 510) may receive a cloud game from the cloud server (420 or 520). The cloud game may be streamed or downloaded. While executing the cloud game, the display device (410 or 510) may execute the game operation according to the key input received from the gamepad. The display device (410 or 510) may display a game screen (4151 or 5151) on the display (415 or 515) while executing the cloud game. The guide screen (4152 or 5152) may be displayed to overlap or on top of at least a partial area of the game screen (4151 or 5151) based on a predetermined condition.

The cloud game may include game provider information. The game provider information, together with the cloud game, may be transmitted to the display device (410 or 510). The game provider information may be transmitted to the display device( 410 or 510) as at least a part of the cloud game. The game provider information may be pre-stored in the memory of the display device (410 or 510).

Referring to FIG. 4, the display device 410 may compare manufacturer information about the first gamepad 441 with game provider information, according to one or more embodiments. If the identification code indicating the manufacturer information about the first gamepad 441 does not match the identification code indicating the game provider information, the display device 410 may determine that the manufacturer information about the first gamepad 441 is not associated with the game provider information. If it is determined that the game provider information is not associated with the manufacturer information about the first gamepad 441, the display device 410 may display the guide screen 4152 on the display 415.

Referring to FIG. 5, the display device 510 may compare manufacturer information about the second gamepad 542 with game provider information, according to one or more embodiments. If the identification code, indicating the manufacturer information about the second gamepad 542, matches the identification code indicating the game provider information, the display device 510 may determine that the manufacturer information about the second gamepad 542 is associated with the game provider information. If it is determined that the game provider information is associated with the manufacturer information about the second gamepad 542, the display device 510 may be configured not to display the guide screen 5152 on the display 515.

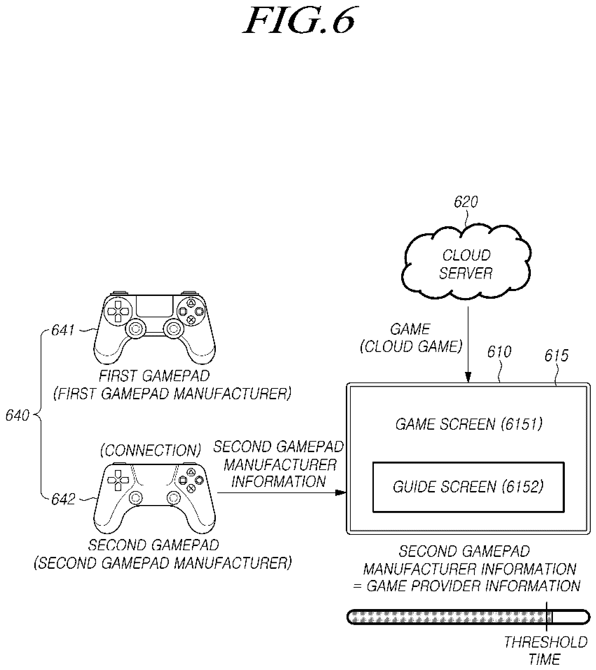

FIG. 6 is a view illustrating an example of displaying a guide screen based on whether a control signal is received, according to one or more embodiments.

Referring to FIG. 6, the display device 610 may be connected to the second gamepad 642. The second gamepad 642 may transmit the second gamepad 642 manufacturer information to the display device 610 based on the connection with the display device 610.

The display device 610 may receive a cloud game from the cloud server 620. The cloud game may be streamed or downloaded. While executing the cloud game, the display device 610 may execute the game operation according to the key input received from the gamepad. The display device 610 may display a game screen 6151 on the display 615 while executing the cloud game. The guide screen 6152 may be displayed to overlap or on top of at least a partial area of the game screen 6151, based on a predetermined condition.

The cloud game may include game provider information. The game provider information, together with the cloud game, may be transmitted to the display device 610. The game provider information may be transmitted to the display device 610 as at least a part of the cloud game. The game provider information may be pre-stored in the memory of the display device 610.

The display device 610 may compare manufacturer information about the second gamepad 642 with game provider information. Even if it is determined that the manufacturer information about the second gamepad 642 is associated with the game provider information, the display device 610 may display the guide screen 6152, if no signal was received.

If the display device 610 does not receive a control signal from the gamepad, until a predetermined time (threshold time) has passed (or exceeded) from the time the most recent control signal was last received, the display device 610 may display the guide screen 6152 on the display 615. The control signal may be a control signal including a key input. For example, if a first control signal is received at a first time point, but measuring from the first time point, if a second control signal, including a key input, is not received by a second time point, after the threshold time has elapsed, the display device 610 may display the guide screen 6152 on the display 615. If the user does not understand the key input, the user may not manipulate the key for a certain period of time. According to an embodiment of the disclosure, the display device 610 may automatically suggest a mapping relationship between the user's key input and a game operation based on delay in control signal input, thereby providing an enhanced sense of gaming experience to the user.

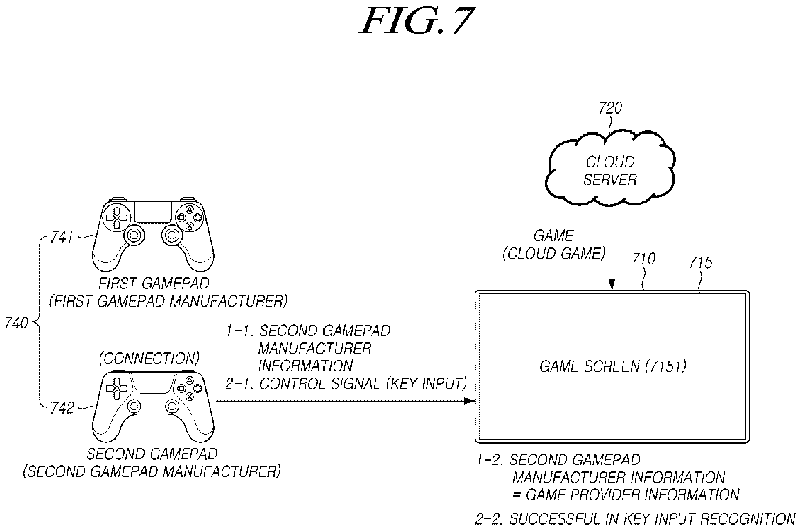

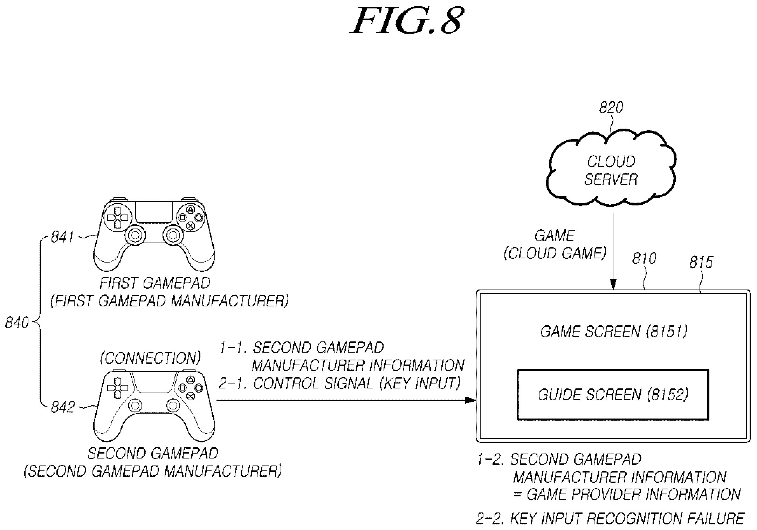

FIGS. 7 and 8 are views illustrating an example in which a result of processing a key input received from a gamepad is abnormal, according to one or more embodiments.

Referring to FIGS. 7 and 8, the display device (710 or 810) may be connected to the second gamepad (742 or 842). The second gamepad (742 or 842) may transmit manufacturer information about the second gamepad (742 or 842) to the display device (710 or 810) based on the connection with the display device (710 or 810).

The display device (710 or 810) may receive a cloud game from the cloud server (720 or 820). The cloud game may be streamed or downloaded. While executing the cloud game, the display device (710 or 810) may execute the game operation in response to the key input received from the gamepad. The display device (710 or 810) may display a game screen (7151 or 8151) on the display (715 or 815) while executing the cloud game. The guide screen (7152 or 8152) may be displayed to overlap or on top of at least a partial area of the game screen (7151 or 8151) based on a predetermined condition.

The cloud game may include game provider information. The game provider information, together with the cloud game, may be transmitted to the display device (710 or 810). The game provider information may be transmitted to the display device (710 or 810) as at least a part of the cloud game. The game provider information may be pre-stored in the memory of the display device (710 or 810).

The display device (710 or 810) may compare manufacturer information regarding the second gamepad (742 or 842) with game provider information. Even if it is determined that the manufacturer information about the second gamepad (742 or 842) is associated with the game provider information, the display device (710 or 810) may display the guide screen (7152 or 8152), if no signal was received.

The display device (710 or 810) may receive a control signal including a key input. The display device (710 or 810) may identify the key input included in the control signal based on the mapping information. If the key input is identified, the display device (710 or 810) may execute a game operation corresponding to the key input, which may be referred to as "successful key input recognition." If the key input is not identified, the display device (710 or 810) may not execute the game operation corresponding to the key input, which may be referred to as a "key input recognition failure."

Referring to FIG. 7, the display device 710 may receive a control signal including a key input from the second gamepad 742. If the game operation, associated with the key input included in the control signal, is identified based on the mapping information, the display device 710 may execute the associated game operation. In this situation, the display device 710 does not display the guide screen 7152 on the display 715.

Referring to FIG. 8, the display device 810 may receive a control signal including a key input from the second gamepad 842. If the game operation, associated with the key input included in the control signal, is not identified based on the mapping information, the display device 810 may not execute the associated game operation. In this situation, the display device 810 may display the guide screen 8152 on the display 815.

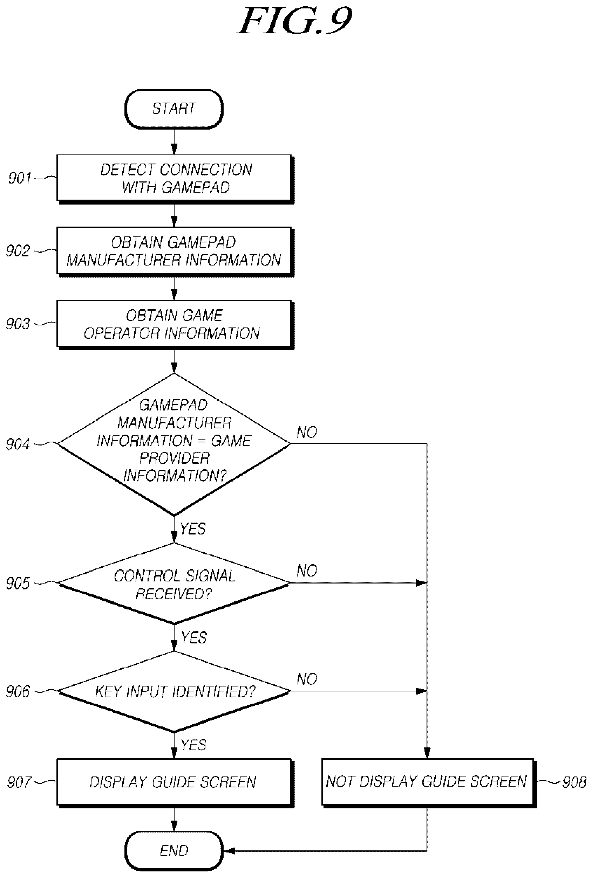

FIG. 9 is a flowchart illustrating a method for displaying a guide screen of a gamepad, according to one or more embodiments.

Referring to FIG. 9, a method for displaying a guide screen may be supported by the gamepad, the display device, and the cloud server described above with reference to FIGS. 1 to 3. For convenience of description, each operation of FIG. 8 is performed by the display device.

In operation 901, the display device may detect a connection with the gamepad. The display device may receive manufacturer information from the gamepad based on an electrical connection to the gamepad.

For example, the gamepads may transmit gamepad manufacturer information to the display device in response to the electrical connection to the display device. The display device may detect the connection to the gamepad based on an electrical signal transmitted or received when the display device is connected to the gamepad. In an example, the display device may request the gamepad manufacturer information from the gamepad, and the gamepad may respond to the gamepad manufacturer information. In an example, the gamepad may transmit the gamepad manufacturer information to the display device based on formation of a connection.

In operation 902, when the connection to the gamepad is detected, the display device may obtain gamepad manufacturer information.

The display device may detect an electrical (or physical) connection or a wireless connection to the gamepad and may obtain gamepad manufacturer information based on the identification of the connection. In an example, the gamepad manufacturer information may be transmitted from the gamepad to the electronic device based on the connection between the gamepad and the electronic device being identified. Whether to transmit gamepad manufacturer information may be determined by at least one of the display device and/or the gamepad. For example, the display device may be configured to request the gamepad manufacturer information from the gamepad based on the connection to the gamepad being detected. For example, the gamepad may be configured to transmit gamepad manufacturer information to the gamepad based on detection of connection to the display device or reception of an electrical signal from the display device.

In operation 903, the display device may obtain game provider information associated with the cloud game. The display device may receive a cloud game from a cloud server.

The display device may receive game provider information associated with the cloud game from the cloud server. For example, the game provider information is at least a part of the cloud game and as such, it may be received together as one with the cloud game. For example, the game provider information may be received from the cloud server separately from the cloud game. When the game provider information is received as at least a part of the cloud game, the display device may identify the game provider information from the cloud game. The display device may transmit or receive electrical signals to/from the cloud server wiredly or wirelessly through a network, and the cloud game may be received from the cloud server through the network. Although not limited thereto, the display device may receive game provider information from the cloud server during reception of the cloud game.

Operations 904 to 906 below relate to predefined conditions for displaying a guide screen. At least some of operations 904 to 906 may be omitted. For example, whether to display the guide screen may be determined based on the result of operation 904. For example, whether to display the guide screen may be determined based on the results of operations 904 and 905. For example, whether to display the guide screen may be determined based on the results of operations 904 to 906. For example, whether to display the guide screen may be determined based on the results of operations 904 and 906.

In operation 904, the display device may determine whether the gamepad manufacturer information is associated with the game provider information by comparing the gamepad manufacturer information with the game provider information.

The gamepad manufacturer information may be obtained earlier in preceding operation 902. The game provider information may be obtained earlier in preceding operation 903. The display device may identify whether the gamepad manufacturer information and the game provider information are associated with each other or not.

In an embodiment, the gamepad manufacturer information and the game provider information may be identified as associated or non-associated, based on a predefined compatibility table. The game provider information may be associated with one or more gamepad manufacturer information. The compatibility table may be configured as an association between the gamepad manufacturer information and the game provider information. Specifically, the display device may compare the gamepad manufacturer information with the game provider information using the compatibility table stored in the memory. The gamepad manufacturer information and the game provider information may be configured in the compatibility table in the form of identification codes respectively corresponding thereto. If the identification code, indicating the gamepad manufacturer information, matches the identification code indicating the game provider information, the display device may determine that the gamepad manufacturer information is associated with the game provider information. Further, if the identification code indicating the gamepad manufacturer information does not match the identification code indicating the game provider information, the display device may determine that the gamepad manufacturer information is not associated with the game provider information.

In operation 905, the display device may determine whether to receive a control signal from the gamepad.

In an embodiment, the display device may measure a duration of time no control signal has been received from the gamepad. The control signal may be a control signal including one or more key inputs. In an example, when an electrical signal is received from the gamepad, the display device may determine whether to receive the control signal by identifying whether the electrical signal is a control signal.

In operation 906, the display device may determine whether to identify the key input.

In an embodiment, the display device may execute the game operation corresponding to the key input received from the gamepad while the game is running. Although not limited thereto, the game operation may be executed by the display device under the condition that the gamepad manufacturer information and the game provider information are identified to be associated with each other.

In an embodiment, the key input may be included in the control signal. In an embodiment, if a control signal is received from the gamepad, the display device may identify a key input included in the control signal. The display device may identify a game operation corresponding to the key input. When the game operation corresponding to the key input is identified, the display device may execute the identified game operation.

In an embodiment, if the game operation corresponding to the key input is not identified, the display device may increase the count value. When the count value exceeds a predetermined threshold value, the display device may determine that the key input is not identified from the control signal. For example, when a control signal is received from the gamepad three or more times, but a key input is not identified from the received control signal(s), the display device may obtain a count value of three. If the count value exceeds the predetermined threshold value, the display device may determine that the key input is not identified. The count value may be continuously increased whenever a key input is not detected in the received control signal, and when a control signal including a key input is received, the count value may be set back to 0.

In operation 907, the display device may not display the guide screen.

In operation 908, the display device may display a guide screen on the display.

In an embodiment, if it is identified that the gamepad manufacturer information and the game provider information are not associated with each other, the display device may display a guide screen on the display. Although not limited thereto, the display device may display the guide screen on the display based on identifying that the gamepad manufacturer information and the game provider information do not match each other.

In an embodiment, the display device may display the guide screen on the display based on a control signal not being received from the gamepad for the predetermined time.

In an embodiment, the display device may display the guide screen on the display based on unidentified or unidentifiable key input. For example, when no key input is identified for N (where N is a natural number) or more number of control signals consecutively received, the display device may display the guide screen on the display.

In an embodiment, the guide screen may be determined based on the gamepad manufacturer information. For example, the display device may select any one of guide screens associated with various gamepads and, the display device may select a guide screen based on the gamepad manufacturer information provided from the gamepad. Guide screens associated with various gamepads may be pre-stored in the memory of the display device.

According to an embodiment, the guide screen may include information for guiding game operations respectively associated with key inputs of the gamepad. The information for guiding the game operations associated with the key inputs may be configured in the form of text or an image.

The display device may obtain a guide screen based on the gamepad manufacturer information or store the guide screen associated with the gamepad manufacturer information in the memory. When the guide screen does not exist in the memory, the display device may obtain the guide screen using the gamepad manufacturer information. However, if it is not possible to identify the type, item name, or product name of the gamepad using the gamepad manufacturer information received from the gamepad, it may be difficult to obtain a guide screen.

According to an embodiment, the display device may receive a gamepad list from an external server based on the unidentified or unidentifiable gamepad manufacturer information of the connected gamepad(s). Further, the display device may display the gamepad list on the display. The gamepad list may include an image or text describing various gamepads. Each item in the gamepad list may correspond to one gamepad.

The user may select any one of items (i.e., represented gamepads) in the gamepad list using an input device (e.g., a remote control device). When a selection of any one of the items in the gamepad list is received, the display device may receive a guide screen corresponding to the selected item through the network or read the guide screen from the memory. The display device may display a guide screen corresponding to the selected item on the display. As such, even when the manufacturer of the gamepad cannot be identified, the display device may display a guide screen necessary in order to invite user input.

Further, according to one or more embodiments of the disclosure, the guide screen may include a first guide screen and a second guide screen. The first guide screen may include guide information associated with the running game and the connected gamepad. The second guide screen may include guide information associated with the connected gamepad regardless of whether the game is running.

The first guide screen may be previously configured based on mapping information between the running game and the gamepad, and the second guide screen may be configured based on default information about the gamepad. For example, the first guide screen may include mapping information between game operations of the game being currently executed by the display device and the gamepad connected to the display device. For example, the second guide screen may include information for introducing key buttons of the gamepad connected to the display device, regardless of the game being executed by the display device. The first guide screen may be referred to as a game-adaptive guide screen, and the second guide screen may be referred to as a default guide screen.

In an embodiment, the mapping information may be received from the cloud server, configured as at least part of the cloud game received from the cloud server, or pre-stored in a memory of the electronic device.

In an embodiment, the mapping information may include identification information for identifying gamepads, a key input list provided for each of the gamepads, and game operation mapped to each key input constituting the key input list. Further, the mapping information may be databased based on the type of the gamepad and the cloud game.

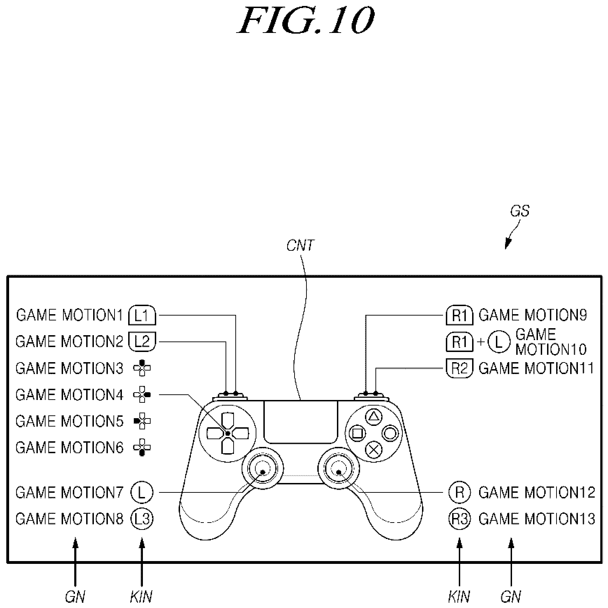

FIG. 10 is a reference view illustrating an example of a guide screen, according to one or more embodiments.

Referring to FIG. 10, a guide screen GS may include a gamepad image CNT, a key input representation KIN, and a game operation representation GN. The gamepad image CNT may be positioned in a central portion of the guide screen GS. The key input representation KIN may be connected to the key button representation of the gamepad image CNT by a line. The game operation representation GN may be disposed vertically or horizontally adjacent to the key input representation KIN. Each key input representation KIN may be matched one-to-one with each game operation representation GN.

Further, a device according to one or more embodiments of the disclosure may be described as follows.

A method for displaying operation information of a gamepad by an electronic device, according to an embodiment of the disclosure, is based on identifying an electrical connection with the gamepad and may comprise obtaining gamepad manufacturer information about the gamepad, obtaining game provider information from a cloud server, which is transmitting (or providing), through a network, a game running (or operating) on the electronic device, and displaying a guide screen on a display based on the gamepad manufacturer information upon identifying that the gamepad manufacturer information and the game provider information are not associated with each other. According to an embodiment, the guide screen may guide game operations associated with key inputs of the gamepad.

In an embodiment, the gamepad manufacturer information and the game provider information may be identified as associated or non-associated based on a predefined compatibility table. The game provider information may be associated with one or more gamepad manufacturer information. The compatibility table may include information about an association between the gamepad manufacturer information and the game provider information.

In an embodiment, the guide screen may be displayed upon identifying that the gamepad manufacturer information and the game provider information do not match each other.

In an embodiment, the gamepad manufacturer information may be transmitted from the gamepad to the electronic device based on identifying the electrical connection between the gamepad and the electronic device.

The method according to an embodiment may further comprise executing a game operation corresponding to a key input received from the gamepad, while running the game, when identifying that the gamepad manufacturer information and the game provider information are associated with each other and displaying the guide screen on the display based on failure to receive a control signal from the gamepad for a predetermined time. The control signal may include one or more key inputs.

If the control signal is received from the gamepad, the method, according to an embodiment, may further comprise, identifying a key input included in the control signal, identifying whether a game operation corresponding to the key input is identified, executing the identified game operation when the game operation corresponding to the key input is identified and increasing a count value when the game operation is not identified, and displaying the guide screen on the display when the count value exceeds a predetermined threshold.

The method according to an embodiment may further comprise receiving a gamepad list from an external server based on failing to identify the gamepad manufacturer information about the connected gamepad and displaying the gamepad list on the display.

The method according to an embodiment may further comprise, when any one of items in the displayed gamepad list is selected, displaying a guide screen on the display corresponding to the selected item.

In an embodiment, the guide screen may include a first guide screen and a second guide screen. The first guide screen may include guide information associated with the running game and the connected gamepad. The second guide screen may include guide information associated with the connected gamepad regardless of whether the game is running. The first guide screen may be configured based on mapping information between the game in execution and the gamepad, and the second guide screen may be configured based on default information about the gamepad.

In an embodiment, the mapping information may be received from the cloud server, configured as at least part of the game received from the cloud server, or pre-stored in a memory of the electronic device.

In an embodiment, the mapping information may include identification information for identifying gamepads, a key input list provided for each of the gamepads, and game provider information mapped to each key input constituting the key input list. The mapping information may be databased based on a type of the gamepad and the game.

In an embodiment, the electronic device may be a display device.

An electronic device according to an embodiment of the disclosure may comprise one or more processors; one or more memories; and one or more transceivers. The one or more processors may be configured to obtain gamepad manufacturer information about the gamepad based on identifying an electrical connection with the gamepad, obtain game provider information from a cloud server, which is transmitting (or providing), through a network, a game running (or operating) on the electronic device, and display a guide screen on a display based on the gamepad manufacturer information when identifying that the gamepad manufacturer information and the game provider information are not associated with each other.

The electronic device according to embodiments may be one of various types of electronic devices. The electronic devices may include, for example, a display device, a portable communication device (e.g., a smartphone), a computer device, a portable multimedia device, a portable medical device, a camera, a wearable device, or a home appliance. The electronic devices according to an embodiment are not limited to those described above.

It should be appreciated that various embodiments of the disclosure and the terms used therein are not intended to limit the technological features set forth herein to particular embodiments and include various changes, equivalents, or replacements for a corresponding embodiment. As used herein, the singular forms "a," "an," and "the" are intended to include the plural forms as well, unless the context clearly indicates otherwise. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

As used herein, the term "part" or "module" may include a unit implemented in hardware, software, or firmware, and may interchangeably be used with other terms, for example, "logic," "logic block," "part," or "circuitry". A part or module may be a single integral component, or a minimum unit or part thereof, adapted to perform one or more functions. For example, according to an embodiment, 'part' or 'module' may be implemented in a form of an application-specific integrated circuit (ASIC).

As used in various embodiments of the disclosure, the term "if' may be interpreted as "when," "upon," "in response to determining," or "in response to detecting," depending on the context. Similarly, "if A is determined" or "if A is detected" may be interpreted as "upon determining A" or "in response to determining A", or "upon detecting A" or "in response to detecting A", depending on the context.

The program executed by the electronic device described herein may be implemented as a hardware component, a software component, and/or a combination thereof. The program may be executed by any system capable of executing computer readable instructions.

The software may include computer programs, codes, instructions, or combinations of one or more thereof and may configure the processing device as it is operated as desired or may instruct the processing device independently or collectively. The software may be implemented as a computer program including instructions stored in computer-readable storage media. The computer-readable storage media may include, e.g., magnetic storage media (e.g., read-only memory (ROM), random-access memory (RAM), floppy disk, hard disk, etc.) and an optically readable media (e.g., CD-ROM or digital versatile disc (DVD). Further, the computer-readable storage media may be distributed to computer systems connected via a network, and computer-readable codes may be stored and executed in a distributed manner. The computer program may be distributed (e.g., downloaded or uploaded) via an application store (e.g., Play Store^{™}), directly between two UEs (e.g., smartphones), or online. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. **In** such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A method for displaying operation information of a gamepad by an electronic device, the method comprising:
based on identifying an electrical connection with the gamepad, obtaining gamepad manufacturer information about the gamepad;
obtaining game provider information from a cloud server, which is providing, through a network, a game operating on the electronic device; and
based on identifying that the gamepad manufacturer information is not associated with the game provider information, displaying a guide screen on a display based on the gamepad manufacturer information,
wherein the guide screen guides game operations associated with key inputs of the gamepad.

2. The method of claim 1, wherein the gamepad manufacturer information is identified as being associated with or being not associated with the game provider information based on a compatibility table, and
wherein the compatibility table includes information about an association between the gamepad manufacturer information and the game provider information.

3. The method of claim 1, wherein the displaying the guide screen comprises, based on identifying that the gamepad manufacturer information does not correspond to the game provider information, displaying the guide screen based on the gamepad manufacturer information.

4. The method of claim 1, wherein the obtaining the gamepad manufacturer information comprises, based on identifying the electrical connection between the gamepad and the electronic device, receiving the gamepad manufacturer information from the gamepad.

5. The method of claim 1, further comprising:
based on identifying that the gamepad manufacturer information is associated with the game provider information, executing a game operation corresponding to a key input, from among the key inputs, received from the gamepad while operating the game; and
based on failing to receive a control signal from the gamepad for a predetermined time, displaying, on the display, the guide screen,
wherein the control signal includes one or more key inputs of the key inputs.

6. The method of claim 5, further comprising:
based on the control signal being received from the gamepad:
identifying the one or more key inputs in the control signal;
identifying whether the game operation corresponding to the one or more key inputs is identified;
based on the game operation corresponding to the one or more key inputs being identified, executing the identified game operation; and
based on the game operation corresponding to the one or more key inputs being not identified, increasing a count value, and based on the count value exceeding a predetermined threshold, displaying, on the display, the guide screen.

7. The method of claim 1, further comprising:
based on failing to obtain the gamepad manufacturer information, receiving a gamepad list from an external server; and
displaying the gamepad list on the display.

8. The method of claim 7, further comprising:
based on any item in the displayed gamepad list being selected, displaying, on the display, the guide screen corresponding to the selected item.

9. The method of claim 1, wherein the guide screen includes a first guide screen and a second guide screen,
wherein the first guide screen includes guide information associated with an operating game and the gamepad,
wherein the second guide screen includes guide information associated with the gamepad regardless of the operating game, and
wherein the first guide screen is configured based on mapping information between the operating game and the gamepad, and the second guide screen is configured based on default information about the gamepad.

10. The method of claim 9, wherein the mapping information is received from the cloud server, configured based on at least part of the game provided from the cloud server, or is pre-stored in a memory of the electronic device.

11. The method of claim 10, wherein the mapping information includes identification information for identifying gamepads, a key input list provided for each of the gamepads, and game operation information mapped to each key input included in the key input list, and
wherein the mapping information is databased based on a type of the gamepad and the game.

12. The method of claim 1, wherein the electronic device is a display device.

13. An electronic device comprising:
a display;
at least one processor;
at least one memory configured to store at least one instruction; and
at least one transceiver,
wherein the at least one processor is configured to execute the at least one instruction to:
based on identifying an electrical connection with a gamepad, obtain gamepad manufacturer information about the gamepad;
obtain game provider information from a cloud server which is providing, through a network, a game operating on the electronic device; and
based on identifying that the gamepad manufacturer information is not associated with the game provider information, control the display to display a guide screen based on the gamepad manufacturer information.

14. The electronic device of claim 13, wherein the at least one processor is further configured to execute the at least one instruction to:
identify the gamepad manufacturer information as being associated with or being not associated with the game provider information based on a compatibility table, and wherein the compatibility table includes information about an association between the gamepad manufacturer information and the game provider information.

15. The electronic device of claim 13, wherein the at least one processor is further configured to execute the at least one instruction to:
based on identifying that the gamepad manufacturer information does not correspond to the game provider information, control the display to display the guide screen based on the gamepad manufacturer information.
